# EUROPEAN PATENT SPECIFICATION

(11) **EP 4 002 516 B1**
(45) Date of publication and mention of the grant of the patent: **07.10.2026**
(21) Application number: 21812418.8
(22) Date of filing: 24.05.2021
(51) Int. Cl.: H01M 4/13, H01M 4/36, H01M 4/38, H01M 4/62, H01M 4/139, H01M 4/04, H01M 10/052, H01M 4/02, C01B 17/00

(54) **FREE-STANDING FILM-TYPE POSITIVE ELECTRODE MATERIAL FOR LITHIUM SECONDARY BATTERY, METHOD FOR MANUFACTURING SAME, AND LITHIUM SECONDARY BATTERY COMPRISING SAME**
FREISTEHENDES POSITIVES ELEKTRODENFOLIENMATERIAL FÜR LITHIUM-SEKUNDÄRBATTERIE, VERFAHREN ZU DESSEN HERSTELLUNG UND LITHIUM-SEKUNDÄRBATTERIE DAMIT
MATÉRIAU D'ÉLECTRODE POSITIVE DE TYPE À FILM AUTOPORTANT POUR BATTERIE SECONDAIRE AU LITHIUM, SON PROCÉDÉ DE FABRICATION ET BATTERIE SECONDAIRE AU LITHIUM COMPRENANT CELUI-CI

(30) Priority: 27.05.2020 KR 20200063882; 18.05.2021 KR 20210064083
(43) Date of publication of application: 25.05.2022
(73) Proprietor: LG Energy Solution, Ltd., Seoul 07335 (KR)
(72) Inventor: KIM, Minsu, Daejeon 34122 (KR); HONG, Kyungsik, Daejeon 34122 (KR)
(74) Representative: Hoffmann Eitle
(86) International application number: PCT/KR2021/006415
(87) International publication number: WO 2021/241959

(56) References cited:
- KR-A- 20050 052 258
- KR-A- 20150 135 961
- KR-A- 20160 051 610
- KR-A- 20160 051 610
- KR-A- 20200 017 340
- KR-B1- 101 829 104
- US-A1- 2018 100 037
- US-A1- 2018 212 252
- US-A1- 2020 052 279
- DILLARD CAITLIN, CHUNG SHENG-HENG, SINGH ARVINDER, MANTHIRAM ARUMUGAM, KALRA VIBHA: "Binder-free, freestanding cathodes fabricated with an ultra-rapid diffusion of sulfur into carbon nanofiber mat for lithiumsingle bondsulfur batteries", MATERIALS TODAY ENERGY, vol. 9, 1 September 2019 (2019-09-01), pages 336 - 334, XP055871550, ISSN: 2468-6069, DOI: 10.1016/j.mtener.2018.06.004

## Description

### [Technical Field]

The present application claims the benefits of priorities based on Korean Patent Application No. 2020-0063882 filed on May 27, 2020 and Korean Patent Application No. 2021-0064083 filed on May 18, 2021.

One aspect of the present disclosure relates to a positive electrode material for a free-standing film-type lithium secondary battery, a preparation method thereof, and a lithium secondary battery comprising the same.

### [Background Art]

Recently, with the rapid development in the field of electronic devices and electric vehicles, the demand for secondary batteries is increasing. In particular, with the trend toward miniaturization and weight reduction of portable electronic devices, there is a growing demand for secondary batteries having a high energy density that can cope with them.

Among the secondary batteries, a lithium-sulfur secondary battery is a secondary battery that uses sulfur-based compounds having a sulfur-sulfur bond as a positive electrode active material, and uses alkali metals such as lithium, carbon-based materials in which intercalation and deintercalation of metal ions such as lithium ions occur, or silicon or tin, which forms an alloy with lithium, as a negative electrode active material. Specifically, in the case of the lithium-sulfur secondary battery, during the discharging which is a reduction reaction, as the sulfur-sulfur bond is cut off, the oxidation number of sulfur decreases, and during the charging which is an oxidation reaction, as the oxidation number of sulfur increases, the sulfur-sulfur bond is re-formed. Through this oxidation-reduction reaction, electrical energy is stored and generated.

In particular, sulfur used as a positive electrode active material in lithium-sulfur secondary batteries has a theoretical energy density of 1.675 mAh/g, and thus has a theoretical energy density of about five times higher than the positive electrode active material used in conventional lithium secondary batteries, thereby enabling batteries to express high power and high energy density. In addition, since sulfur has the advantage of being cheap and rich in resources and thus being readily available and environmentally friendly, sulfur is drawing attention as an energy source not only for portable electronic devices but also for medium and large devices such as electric vehicles.

In the lithium-sulfur battery, since sulfur, which is used as a positive electrode active material, has an electrical conductivity of 5 x 10⁻³⁰ S/cm, and thus is a non-conductor that does not have electrical conductivity, there is a problem that the movement of electrons generated by the electrochemical reaction is difficult. Therefore, it is being used as a sulfur-carbon composite in combination with a conductive material such as carbon that can provide an electrochemical reaction site.

In order to use the sulfur-carbon composite as a positive electrode material, a method of preparing a slurry together with an electrically conductive material and a binder and then manufacturing a positive electrode through a slurry process of applying the slurry to a current collector is generally used.

However, the positive electrode manufactured by the slurry process has a problem in that the loading amount of the positive electrode is reduced due to the electrically conductive material and the binder used in the preparation of the slurry, so that the energy density is also reduced. In addition, the slurry process has a problem in that the time and cost required for a series of detailed processes including mixing, coating, drying and rolling are increased.

Therefore, it is necessary to develop a technology capable of manufacturing a positive electrode for a lithium secondary battery with a high loading amount by a simple process.

### [Prior Art Document]

### [Patent Documents]

(Patent Document 1) Korean Patent Publication No. 2019-0100152
(Patent Document 2) Chinese Patent Publication No. 109873120
(Patent Document 3) US Patent Publication No. 2018-0212252

### [Disclosure]

### [Technical Problem]

The inventors of one aspect of the present disclosure have conducted various studies to solve the above problems, and as a result, have confirmed that a free-standing film-type positive electrode material made of a carbon-containing sulfur melt can be prepared through a dry process in which the sulfur-carbon composite is subjected to a pressurization condition by using the property of melting sulfur formed on the surface of the sulfur-carbon composite under a pressurization condition and gathering it with the surrounding sulfur and the flexibility of the carbon material and confirmed that the free-standing film-type positive electrode material itself can be applied as a positive electrode of a lithium secondary battery.

Therefore, it is an object of one aspect of the present disclosure to provide a positive electrode material for a free-standing film-type lithium secondary battery containing carbon-containing sulfur melt and a method for preparing the same.

It is another object of another aspect of the present disclosure to provide a lithium secondary battery comprising the positive electrode material for the free-standing film-type lithium secondary battery.

### [Technical Solution]

In order to achieve the above objects, one aspect of the present disclosure provides a positive electrode material for a lithium secondary battery, wherein the positive electrode material is in a form of a free-standing film, and wherein the positive electrode material consists of a carbon-containing sulfur melt.

The present invention also provides a method of manufacturing a positive electrode material for a lithium secondary battery comprising the step of,
(S1) mixing sulfur and a porous carbon material to form a mixture;
(S2) heat-treating the mixture formed in step (S1); and
(S3) forming a carbon-containing sulfur melt by filling the sulfur-carbon composite formed in step (S2) in a container and then pressurizing the sulfur-carbon comprises composite in the container.

The present invention also provides a lithium secondary battery comprising a positive electrode comprising the positive electrode material; a negative electrode comprising lithium metal or a lithium alloy; a separator positioned between the positive electrode and the negative electrode; and an electrolyte solution impregnating the positive electrode, negative electrode and separator.

### [Advantageous Effects]

The positive electrode material according to the present invention consists of a carbon-containing sulfur melt made of only sulfur and porous carbon material to implement a high loading amount of the positive electrode.

In addition, the positive electrode material itself can be used as a positive electrode as a free-standing film-type, rather than a method of coating the current collector using a slurry.

In addition, the positive electrode material may be prepared by a simple dry process in which sulfur and porous carbon material are mixed and then heat-treated and then pressurized, thereby improving process efficiency in terms of cost and time, rather than a slurry process including a series of detailed processes including mixing, coating, drying and rolling.

### [Description of Drawings]

FIG. 1 is a schematic diagram showing changes in physical properties and moldability when pressing sulfur, carbon and sulfur-carbon composite which can be used as a positive electrode material for a lithium secondary battery.
FIG. 2 is a photograph of the free-standing film-type positive electrode material prepared in Example 1.
FIG. 3 is a photograph of the positive electrode material prepared in Comparative Example 3.
FIGs. 4a and 4e are graphs showing measurement results of initial discharge capacity for coin cells to which positive electrode materials prepared in Examples and Comparative Examples are applied.
FIG. 5 is a graph showing the measurement results of lifetime characteristics for coin cells to which the positive electrode materials prepared in Example 2 and Comparative Example 2 are applied.
FIG. 6 is a SEM photograph of carbon nanotubes (CNTs) and sulfur-carbon composites (S-CNTs) of Preparation Example 1.

### [Best Mode]

Hereinafter, the present invention will be described in more detail in order to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

As used herein, the term "free-standing film" refers to a film capable of maintaining the shape of a film by itself without a separate support at room temperature and atmospheric pressure.

As used herein, the term "carbon-containing sulfur melt" refers to a material in which the porous carbon material is dispersed inside the sulfur melt, which may be prepared through heat treatment and pressurization using sulfur and carbon as raw materials.

### Positive electrode material for lithium secondary battery

One aspect of the present disclosure provides a positive electrode material for a lithium secondary battery in the form of a free-standing film, wherein the positive electrode material consists of carbon-containing sulfur melt. The positive electrode material is in a form in which a porous carbon material is dispersed in a sulfur melt. In addition, as will be described later, since the positive electrode material is prepared by a dry process using only sulfur and a porous carbon material as raw materials, it is composed of only sulfur and the porous carbon material.

In general, the sulfur-carbon composite used as a positive electrode material of a lithium secondary battery means a composite in which sulfur is supported on a porous carbon material. For example, sulfur may be uniformly attached or coated on the surface of the porous carbon material. In addition, the sulfur may be attached, filled, or coated in the internal pores of the porous carbon material.

However, in the present disclosure, the positive electrode material consists of a carbon-containing sulfur melt in which a porous carbon material is dispersed inside the sulfur melt, and may be easily molded due to the properties of sulfur that melts and aggregates under pressurization condition, and is prepared in the form of a free-standing film due to the flexibility of the porous carbon material.

The positive electrode material in the form of a free-standing film may not be coated on the current collector, and also the positive electrode material itself in the form of a free-standing film may be utilized as a positive electrode.

Since the positive electrode material is prepared by a dry process using sulfur and a porous carbon material as raw materials, as it contains only sulfur and the porous carbon material, so it has the advantage of high loading when used as a positive electrode. In addition, the dry process can omit a series of processes such as mixing, defoaming, coating, drying and rolling required in the conventional slurry process, thereby reducing process costs. In addition, since the dry process does not use a slurry, the carbon-containing sulfur melt prepared by the dry process does not contain any binder, so that the deterioration of battery performance due to resistance by the binder can be fundamentally eliminated. In addition, since the carbon-containing sulfur melt prepared by the dry process does not contain an electrically conductive material at all, the problem of the deterioration of moldability by the electrically conductive material lacking cohesive force can be minimized.

In addition, the positive electrode material is connected by the sulfur melt formed on the surface of the porous carbon material or surrounding the porous carbon material in a state where the carbon material forms the skeleton of the positive electrode material, thereby exhibiting the form of a free-standing film.

In addition, the positive electrode material may be a positive electrode material having an adhesive strength of 10 gf/cm or more in the positive electrode material after press-molding of the electrode. The adhesive strength is due to the property of sulfur that melts and aggregates with surrounding sulfur during the pressing process. If the adhesive strength of the positive electrode material is less than 10 gf/cm, it may be difficult to form the electrode due to the lack of adhesive strength between the positive electrodes. Specifically, the adhesive strength may be 10 gf/cm or more, 15 gf/cm or more, 20 gf/cm or more, 25 gf/cm or more, 30 gf/cm or more, or 35 gf/cm or more. In addition, the upper limit of the adhesive strength may be, but is not limited to, 50 gf/cm or less, 60 gf/cm or less, 70 gf/cm or less, 80 gf/cm or less, 90 gf/cm or less, or 100 gf/cm or less. As the adhesive strength in the positive electrode material is increased, it can be good in terms of moldability, durability and battery performance.

In addition, the porosity of the positive electrode material may be 68% or less, 65% or less, 60% or less, or 55% or less, and 45% or more or 50% or more. If the porosity of the positive electrode material is more than 68%, the durability of the positive electrode may be reduced. If the porosity of the positive electrode material is less than 45%, since the space in the pores where the electrochemical reaction occurs is narrowed, it may be difficult to normally operate the cell.

The sulfur is at least one selected from the group consisting of inorganic sulfur (S₈), Li₂Sₙ (n ≥ 1, wherein n is an integer), organic sulfur compounds and carbon-sulfur polymers[(C₂Sₓ)ₙ, 2.5 ≤ x ≤ 50, n ≥ 2, wherein x and n are an integer].

In addition, the content of sulfur may be 50 wt.% or more, 55 wt.% or more, or 60 wt.% or more, 70 wt.% or less, 75 wt.% or less, 80 wt.% or less, based on the total weight of the carbon-containing sulfur melt. If the content of sulfur is less than 50% by weight, as the ratio of sulfur, which is an electrochemically active material, is decreased, the thickness of the sulfur melt formed on the surface of the porous carbon material becomes thinner, so that it may be difficult to form the carbon-containing sulfur melt properly, or the amount of sulfur may be reduced and thus the capacity of the battery may be reduced. In addition, if the content of sulfur is more than 80 wt.%, since the nonconductive sulfur blocks the conductive structure of the porous carbon material, the electrochemical activity is blocked, so that the operation of the battery may be limited.

When sulfur is contained in the carbon-containing sulfur melt in an amount of 50 wt.% to 80 wt.%, the positive electrode material can exhibit strong self-cohesion, and the porous carbon material can be well dispersed in the sulfur melt, so that a positive electrode in free-standing form can be formed well.

In one aspect of the present disclosure, the porous carbon material may have a structure in which pores or hollows are formed therein, or may be a porous carbon material having a high specific surface area, and any material commonly used in the art may be used.

The porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon. Preferably, the porous carbon material may be carbon nanotubes.

The carbon nanotubes may have more connection points due to structural characteristics, and thus may be more advantageous when forming a free-standing film. Specifically, since the carbon nanotubes have a shape having an aspect ratio of greater than 1, they may be advantageously connected to each other to form a free-standing film.

In addition, the graphene refers to the form of a single layer in which carbon atoms are arranged in a two-dimensional honeycomb shape, which is a material that has a thin, wide cross-sectional area and excellent conduction properties, and exhibits excellent physical properties such as bending properties and high sensitivity to light. In the present invention, graphene comprises at least one selected from reduced graphene formed by reducing graphene oxide and physically exfoliated graphene. The graphene thin film may be comprised in a form surrounding the outer surface of the carbon nanotube, and can suppress the leaching of sulfur into the electrolyte solution during operation of the battery while reinforcing the electrical conduction path.

In addition, the content of the porous carbon material may be 20 wt.% or more, 25 wt.% or more, 30 wt.% or more, or 35 wt.% or more, and may be 40 wt.% or less, 45 wt.% or less, or 50 wt.% or less, based on the total weight of the carbon-containing sulfur melt. If the content of the porous carbon material is less than 20 wt.%, the surface area and space on which molten sulfur can be filled, attached or coated are not sufficiently provided, so that electrochemical availability (reactivity) of sulfur may be reduced. If the carbon material is more than 50 wt.%, the content of sulfur is relatively lowered, so that when applied to a lithium secondary battery, the energy density of the battery may be excessively reduced.

### Preparation method of positive electrode material for lithium secondary battery

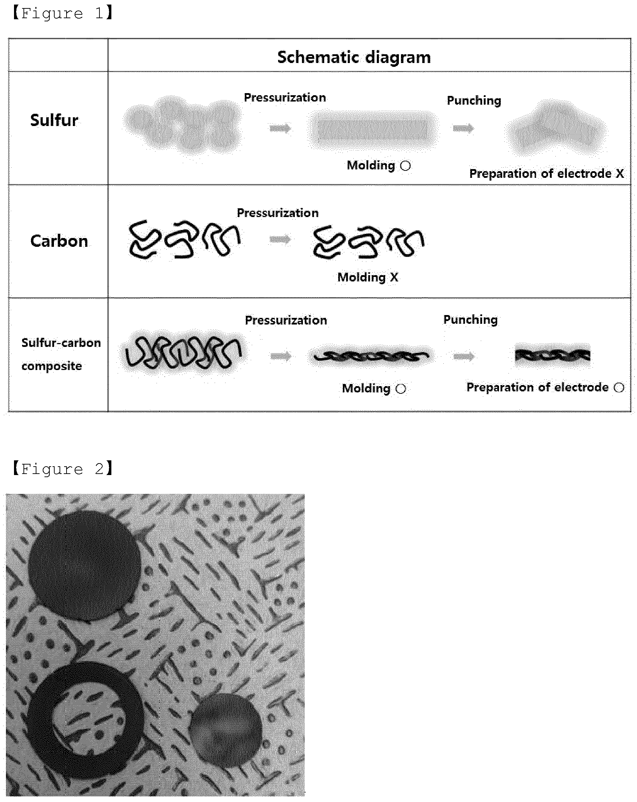

FIG. 1 is a schematic diagram showing changes in physical properties and moldability when pressing sulfur, carbon and sulfur-carbon composite which can be used as a positive electrode material for a lithium secondary battery.

The sulfur can be molded because its surface is melted under pressurization condition and exhibits a property of gathering with surrounding sulfur, but since sulfur is inflexible, it is impossible to prepare a positive electrode material (positive electrode) in the form of a free-standing film by sulfur alone.

Since the carbon is flexible but lacks cohesive strength, when pressed, it cannot be molded by itself, and thus cannot produce a positive electrode material (positive electrode) in the form of a free-standing film.

The sulfur-carbon composite is a composite of sulfur and a porous carbon material. In the case of the sulfur-carbon composite, since sulfur is also present on the outer surface of the porous carbon material, and when pressed, the sulfur present on the outer surface of the porous carbon material is melted, and thus the porous carbon material exists in a dispersed form in the sulfur melt and the sulfur-carbon composite can be molded, and since the porous carbon material is flexible, it is also possible to form a positive electrode material (positive electrode) in the form of a free-standing film by punching.

Therefore, another aspect of the present disclosure provides a method of preparing a positive electrode material for a lithium secondary battery by applying the sulfur-carbon composite to a dry process using the characteristics of the sulfur-carbon composite as described above during pressurization to form a carbon-containing sulfur melt.

The preparation method of the positive electrode material for the lithium secondary battery comprises the following steps (S1) to (S3):
(S1) mixing sulfur and a porous carbon material;
(S2) heat-treating the mixture formed in step (S1); and
(S3) forming a carbon-containing sulfur melt by filling the sulfur-carbon composite formed in step (S2) in a container and then pressurizing it.

Hereinafter, the preparation method of the positive electrode material for a lithium secondary battery of the present invention will be described in more detail for each step.

In step (S1), a mixture of sulfur, which is a raw material for manufacturing the positive electrode material made of the carbon-containing sulfur melt, and a porous carbon material may be formed. In this case, the type and appropriate weight range of sulfur and the porous carbon material are the same as described above.

In step (S2), the mixture formed in step (S1) may be heat-treated.

If the mixture of sulfur and the porous carbon material is heated, the sulfur is changed to a liquid state and then sulfur in the liquid state enters the interior of the porous carbon material or is coated or adhered to the surface, so that the porous carbon material is dispersed in sulfur in the liquid state. For example, if the porous carbon material is a carbon nanotube, sulfur in the liquid state is sucked into the carbon nanotubes through capillary action, sulfur is supported on the carbon nanotubes, and the carbon nanotubes are dispersed in sulfur in the liquid state.

The heat treatment may be performed above the melting point of sulfur. For example, the heat treatment temperature may be 130 °C or more, 140 °C or more, or 150 °C or more, and 160 °C or less, 165 °C or less, or 170 °C or less. If the heat treatment temperature is less than 130 °C, sulfur does not melt and thus it is difficult to form a form supported or coated on the carbon material and also it is difficult to form a form in which the carbon material is dispersed in sulfur. If the heat treatment temperature is higher than 170 °C, the volatilization of sulfur may occur and thus the loss of sulfur and the deterioration of manufacturing equipment may be induced.

In addition, the heat treatment time is possible as long as the sulfur is melted and supported on the porous carbon material by heat treatment or the porous carbon material can be dispersed into sulfur, and it may be 25 minutes or more or 30 minutes or more, and 40 minutes or less, 45 minutes or less, or 50 minutes or less.

In step (S3), the carbon-containing sulfur melt formed in step (S2) is filled in a container and pressurized to prepare a positive electrode material in the form of a free-standing film.

The composite of sulfur and carbon has a characteristic that shows strong self-cohesion in the pressurized state. Specifically, in a pressurized state, the sulfur on the surface of the sulfur-carbon composite is partially melted to give connectivity, thereby exhibiting strong self-cohesion. Accordingly, if pressure is applied to the sulfur-carbon composite, a sulfur melt in which carbon is dispersed is formed, and cohesive force is generated between the carbon particles, and also since the carbon material functions as a skeleton and has flexibility by itself, a free-standing film is formed.

The pressure at the time of pressurization can be a pressure to an extent that cohesion between the sulfur-carbon composites is sufficiently generated to form a free-standing film. For example, the pressure at the time of pressurization may be 0.8 MPa or more, 0.9 MPa or more, or 1 MPa or more, and 5 MPa or less, 8 MPa or less, 10 MPa or less, 13 MPa or less, or 15 MPa or less. If the pressure at the time of pressurization is less than 0.8 MPa, the cohesive force between the sulfur-carbon composites is weak, and a free-standing film may not be formed. If the pressure at the time of pressurization exceeds 15 MPa, the porosity of the positive electrode material is too low, and the structure of the electrode may be collapsed.

### Lithium secondary battery

The other aspect of the present disclosure also relates to a lithium secondary battery comprising, as a positive electrode, the free-standing film-type positive electrode material which contains the carbon-containing sulfur melt, as described above.

If the free-standing film-type positive electrode material is used as a positive electrode, the loading amount of the positive electrode active material in the positive electrode may be from 3.0 mAh/cm² to 5.0 mAh/cm², which may be due to the positive electrode material being prepared by a dry process that does not require a binder or an electrically conductive material.

The lithium secondary battery according to the present invention comprises a positive electrode, a negative electrode, and an electrolyte interposed therebetween, wherein the positive electrode material itself in the form of a free-standing film as described above as the positive electrode may be used as the positive electrode.

In addition, in the lithium secondary battery according to the present invention, the negative electrode is manufactured by forming a negative electrode active material layer having a negative electrode active material on the negative electrode current collector, or may be a negative electrode active material layer (for example, lithium foil) alone.

At this time, the types of the negative electrode current collector and the negative electrode active material layer are not particularly limited in the present invention, and known materials can be used.

In addition, the negative electrode current collector is not particularly limited as long as it has electrical conductivity without causing a chemical change in the battery. For example, copper, stainless steel, aluminum, nickel, titanium, sintered carbon, copper, or stainless steel surface-treated with carbon, nickel, titanium, silver or the like; aluminum-cadmium alloy or the like may be used as the negative electrode current collector. Also, as with the positive electrode current collector, the shape of the negative electrode current collector can be various forms such as a film having fine irregularities on its surface, a sheet, a foil, a net, a porous body, foam, a nonwoven fabric and the like.

In addition, the negative electrode active material may comprises, but is not limited to, at least one carbon-based material selected from the group consisting of crystalline artificial graphite, crystalline natural graphite, amorphous hard carbon, low crystalline soft carbon, carbon black, acetylene black, Ketjen black, Super-P, graphene, and fibrous carbon, Si-based material, metal composite oxides such as LixFe₂O₃(0≤x≤1), LiₓWO₂ (0≤x≤1), SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅; an electrically conductive polymer such as polyacetylene; Li-Co-Ni based material; titanium oxide; lithium titanium oxide.

In addition, the negative electrode active material may be metal composite oxides such as SnxMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅, and may be carbon-based negative electrode active materials such as crystalline carbon, amorphous carbon, or carbon composite alone or in combination of two or more.

In addition, in the lithium secondary battery according to the present invention, any of those conventionally used in the manufacture of a lithium secondary battery can be used as an electrolyte solution.

For example, lithium salts that may be included as electrolytes in the electrolyte solution may be used without limitation as long as they are commonly used in electrolyte solutions for a lithium secondary battery. For example, the anion of the lithium salt may be any one selected from the group consisting of F⁻, Cl⁻, Br⁻, I⁻, NO₃⁻, N(CN)₂⁻, BF₄⁻, ClO₄⁻ , PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻ , SCN⁻ and (CF₃CF₂SO₂)₂N⁻. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂(Lithium bis (perfluoroethylsulfonyl)imide, BETI), LiN(CF₃SO₂)₂(Lithium bis(Trifluoromethanesulfonyl)imide, LiTFSI), LiN(CₐF₂ₐ₊₁SO₂)(C_{b}F_{2b+1}SO₂) (wherein, a and b are natural number, preferably 1≤a≤20, 1≤b≤20), lithium poly[4,4'-(hexafluoroisopropylidene)diphenoxy]sulfonylimide (LiPHFIPSI), LiCl, LiI, LiB(C₂O₄)₂, LiNO₃ or the like. Among them, a sulfonyl group-containing imide lithium compound such as LiTFSI, BETI or LiPHFIPSI may be more preferable.

In the electrolyte solution used in the present invention, the organic solvent contained in the electrolyte solution may be used without limitation so long as they are conventionally used in the electrolyte solution for a lithium secondary battery. Typically, at least one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, tetraethylene glycol dimethyl ether (TEGDME), dioxolane (DOL), dimethylsulfuroxide, acetonitrile, dimethoxyethane, diethoxyethane, vinylene carbonate, sulfolane, gamma-butyrolactone, propylene sulfite, and tetrahydrofuran, and a mixture of two or more of them, and the like can be used representatively. In particular, ethylene carbonate and propylene carbonate which are cyclic carbonates among the carbonate-based organic solvents are highly viscous organic solvents, which can be preferably used because they have a high dielectric constant and dissociate lithium salts in the electrolyte well. If such cyclic carbonates are mixed with a linear carbonate having a low viscosity and a low dielectric constant, such as dimethyl carbonate and diethyl carbonate in an appropriate ratio, an electrolyte solution having a high electrical conductivity can be made, and thus it can be used more preferably.

In addition, in the lithium secondary battery according to the present invention, the separator may be a conventional porous polymer film conventionally used as a separator. For example, as the separator, a porous polymer film made of a polyolefin-based polymer such as ethylene homopolymer, propylene homopolymer, ethylene/butene copolymer, ethylene/hexene copolymer, and ethylene/methacrylate copolymer may be used alone or they may be laminated and used, or a conventional porous nonwoven fabric, for example, a non-woven fabric made of high melting glass fibers, polyethylene terephthalate fibers, or the like may be used, but is not limited thereto.

The type of lithium secondary battery as described above is not particularly limited, and may be, for example, a jelly-roll type, a stack type, a stack-folding type (including a stack-Z-folding type), or a lamination-stack type, preferably a stack-folding type.

The negative electrode, the separator, and the positive electrode as described above are sequentially stacked, and the electrolyte solution is injecting to prepare an electrode assembly, and then the electrode assembly is placed in a battery case and sealed with a cap plate and a gasket to manufacture a lithium secondary battery.

In this case, the lithium secondary battery can be classified into various types of batteries such as lithium-sulfur secondary battery, lithium-air battery, lithium-oxide battery, and lithium all-solid-state battery depending on the materials of positive electrode/negative electrode used, can be classified into cylindrical, rectangular, coin-shaped, pouch type depending on the type, and can be divided into bulk type and thin film type depending on the size. The structure and preparation method of these batteries are well known in the art, and thus detailed description thereof is omitted.

In the present invention, since the lithium secondary battery uses a positive electrode material in the form of a free-standing film which contains the carbon-containing sulfur melt as a positive electrode, it may be a lithium-sulfur secondary battery. The lithium-sulfur secondary battery may use lithium metal as a negative electrode active material. During discharging of the lithium-sulfur secondary battery, an oxidation reaction of lithium occurs at the negative electrode and a reduction reaction of sulfur occurs at the positive electrode. At this time, the reduced sulfur is combined with lithium ions moved from the negative electrode to be converted into lithium polysulfide and finally accompanied by a reaction to form lithium sulfide.

Also, the present invention relates to a battery module comprising the lithium secondary battery, which can be used as a power source for devices requiring high capacity and high-rate characteristics, etc. Specific examples of the device may comprise, but are not limited to, a power tool that is powered by a battery powered motor; electric cars including an electric vehicle (EV), a hybrid electric vehicle (HEV), a plug-in hybrid electric vehicle (PHEV), and the like; an electric motorcycle including an electric bike (E-bike) and an electric scooter (Escooter); an electric golf cart; and a power storage system.

Hereinafter, preferred examples are presented to facilitate understanding of the present invention. However, it is apparent to those skilled in the art that the following examples are merely illustrative of the present invention and that various changes and modifications can be made within the scope and spirit of the present invention, and also that such changes and modifications fall within the scope of the appended claims.

### Preparation Example 1: Preparation of sulfur-carbon composite

Sulfur (S) and carbon nanotubes (CNT) were uniformly mixed in a solid state in a weight ratio of 65:35, and then ball-milled at 100 rpm for 1 hour to prepare a mixture.

The mixture was heat-treated at 155 °C for 35 minutes, allowing sulfur to be loaded into the pores of CNTs and to be coated on their surface to prepare a sulfur-carbon composite (S-CNT). In this case, the CNTs having a specific surface area of 350 m²/g were used.

### Example 1

### (1) Preparation of free-standing film-type positive electrode material

The sulfur-carbon composite (S-CNT) of Preparation Example 1 was filled in a mold, and pressurized at a pressure of 1 MPa using a hydraulic press to form a carbon-containing sulfur melt, thereby preparing a free-standing film-type positive electrode material, as shown in FIG. 2.

### (2) Manufacture of lithium-sulfur secondary battery

The prepared free-standing film-type positive electrode material was prepared as a positive electrode, and lithium metal having a thickness of 150 µm was prepared as a negative electrode.

Lithium bis(trifluoromethanesulfonyl)imide (LiTFSI) at a concentration of 1 M and lithium nitrate (LiNO₃) at a concentration of 0.1 M were mixed in an organic solvent formed by mixing tetraethylene glycol dimethyl ether (TEGDME) /dioxolane (DOL)/dimethoxyethane (DME) in a volume ratio of 1:1:1 to prepare a electrolyte solution.

A porous polyethylene separator having a thickness of 20 µm and a porosity of 45% was interposed between the positive electrode and the negative electrode to prepare an electrode assembly, and the electrode assembly was placed inside the case, and then the electrolyte was injected into the case to prepare a lithium-sulfur secondary battery.

### Example 2

The same method as in Example 1 was performed, except that the pressure at the time of pressurization of the sulfur-carbon composite is 1.5 MPa.

### Example 3

The same method as in Example 1 was performed, except that the pressure at the time of pressurization of the sulfur-carbon composite is 3 MPa.

### Comparative Example 1

A lithium-sulfur secondary battery was prepared in the same manner as in Example 1, except that the sulfur-carbon composite (S-CNT) of Preparation Example 1, an electrically conductive material, and a binder were mixed in a weight ratio of 90:5:5 to prepare a slurry, then coated on aluminum foil, dried and rolled to prepare a positive electrode.

At this time, the electrically conductive material was VGCF (Vapor grown carbon fiber), and the binder was SBR (Styrene Butadiene Rubber).

Also, by the rolling, the porosity of the positive electrode was set to be 68%.

### Comparative Example 2

A lithium-sulfur secondary battery was prepared in the same way as Comparative Example 1, except that the rolled thickness is reduced relative to Comparative Example 1, so that the porosity of the positive electrode is 65%.

### Comparative Example 3

A lithium-sulfur secondary battery was prepared in the same way as Comparative Example 1, except that the rolled thickness is reduced relative to Comparative Example 2, so that the porosity of the positive electrode is 58%.

### Comparative Example 4

The same method as in Example 1 was performed, except that the pressure at the time of pressurization of the sulfur-carbon composite is 0.5 MPa.

### Comparative Example 5

The same method as in Example 1 was performed, except that the pressure at the time of pressurization of the sulfur-carbon composite is 20 MPa.

### Comparative Example 6

A lithium-sulfur secondary battery was prepared in the same manner as in Example 1, except that 10 wt.% of CNT, which is the electrically conductive material, is filled in the mold together with the sulfur-carbon composite and pressed. At this time, the content of the electrically conductive material is based on the total weight of the sulfur-carbon composite and the electrically conductive material.

### Experimental Example 1: Comparison of process time

The time required for the process to prepare the positive electrode material in Examples and Comparative Examples was measured and compared. The time required for the process is as shown in Table 1 below.

**Table 1:**

| Detailed process (unit:hr) | Example 1 | Example 2 | Example 3 | Comparative Example 1 | Comparative Example 2 | Comparative Example 3 |
|---|---|---|---|---|---|---|
| Mixing | - | - | - | 1.5 | 1.5 | 1.5 |
| Coating | - | - | - | 0.5 | 0.5 | 0.5 |
| Drying | - | - | - | 3 | 3 | 3 |
| Rolling | - | - | - | 0.5 | 0.5 | 0.5 |
| Filling | 0.5 | 0.5 | 0.5 | - | - | - |
| Pressing | 0.01 | 0.01 | 0.01 | - | - | - |
| Time in total | 0.51 | 0.51 | 0.51 | 5.5 | 5.5 | 5.5 |

As shown in Table 1 above, it can be seen that in Examples 1, 2, and 3, since the positive electrode materials are prepared using a dry process that includes only filling and pressing processes as detailed processes, the total process time is less than 1 hour.

On the contrary, it can be seen that in Comparative Examples 1, 2 and 3, since the positive electrode materials are prepared using a slurry process including mixing, coating, drying and rolling processes as detailed processes, the total process time all exceeds 5 hours.

From these results, it was confirmed that if a positive electrode material is manufactured using a dry process, process efficiency can be improved.

### Experimental Example 2: Measurement of porosity of positive electrode material and adhesive strength in positive electrode material

The porosity of the positive electrodes prepared in Examples and Comparative Examples was measured and compared, and the results are shown in Table 2.

The porosity was calculated by calculating the density of the positive electrode based on the weight and thickness of the positive electrode, and then inversely calculating the true density of sulfur and carbon (the true density of sulfur: 2.07 mg/cc, the true density of carbon: 2.00 mg/cc).

The adhesive strength was measured using an adhesive strength measuring device (AMETEK company, LS1).

**Table 2:**

| | Pressure when pressurized (MPa) | Porosity (%) | Adhesive strength (gf/cm) |
|---|---|---|---|
| Example 1 | 1 | 68 | 18 |
| Example 2 | 1.5 | 65 | 29 |
| Example 3 | 3 | 58 | 38 |
| Comparative Example 1 | - | 68 | 10 |
| Comparative Example 2 | - | 65 | 13 |
| Comparative Example 3 | - | 58 | 18 |
| Comparative Example 4 | 0.5 | 73 (forming of electrode: X) | 5 |
| Comparative Example 5 | 20 | 40 | 50 |
| Comparative Example 6 | 1.5 | 68 | 8 |

As shown in Table 2 above, it was confirmed that in the case of Examples 1, 2, and 3 in which the positive electrode material was manufactured by the dry process, as the pressure when pressurized is increased, the porosity is reduced and the adhesive strength in the positive electrode material is increased.

Also, it was confirmed that in the case of Comparative Examples 1, 2 and 3 in which the positive electrode material was prepared by a wet process, as the number of rolling is increased, the porosity is decreased and the adhesive strength in the positive electrode material is increased.

If the porosity of the positive electrode material is too high, the durability is lowered, and if the porosity is too low, the electrical conductivity or ionic conductivity is lowered. Therefore, in order to exhibit proper porosity, it is also necessary to properly control the pressure during pressurization.

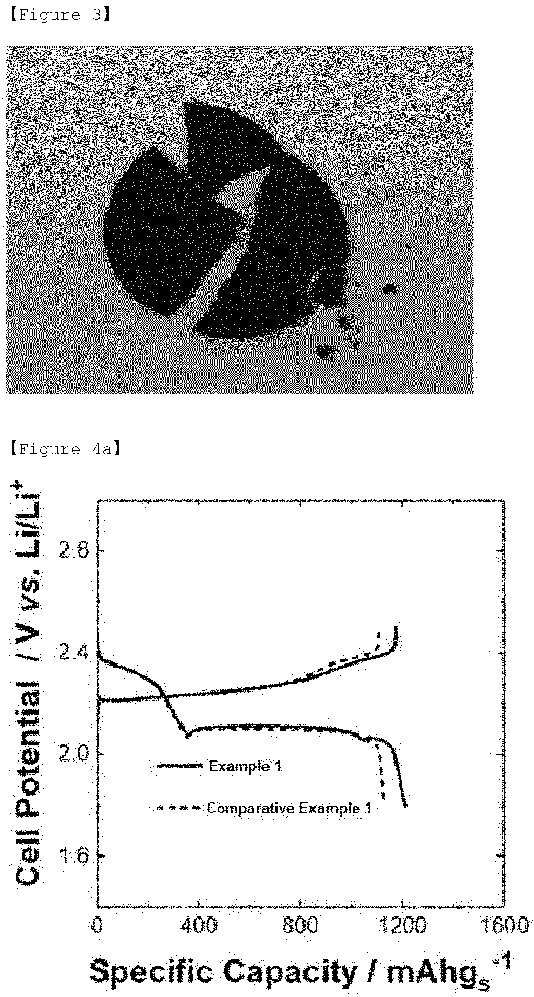

FIG. 3 is a photograph of the positive electrode material obtained in Comparative Example 4. From this, it can be seen that in the case of Comparative Example 4, the positive electrode material is not prepared since the carbon-containing sulfur melt is not formed due to low pressure during pressurization and thus due to lack of cohesion between sulfur-carbon composites.

It can be seen that in the case of Comparative Example 5, the porosity is significantly reduced due to the high-pressure during pressurization, and in the case of Comparative Example 6 which is case where a separate electrically conductive material is externally added to the sulfur-carbon composite, the adhesive strength is significantly reduced.

### Experimental Example 3: Measurement of capacity and charging efficiency

For the batteries manufactured in Examples and Comparative Examples, the capacity (mAh) was measured by discharging at 0.1C and charging at 0.1C at 25 °C, the capacity and charging efficiency were measured by repeating charging and discharging to measure the capacities, and the results are shown in Table 3 below and FIGs. 4a to 4e. As shown in Table 2 above, in the case of Comparative Example 4, the electrode was not manufactured due to the lack of cohesion between the sulfur-carbon composites due to the low pressurized pressure. Therefore, experiments were conducted on Examples 1 to 3 and Comparative Examples 1 to 3 and 5 and 6.

**Table 3:**

| | Initial discharging capacity (mAh/gₛ) | Discharging capacity per electrode (mAh/g_{active}) |
|---|---|---|
| Example 1 | 1211 | 1211 |
| Example 2 | 1183 | 1183 |
| Example 3 | 1191 | 1191 |
| Comparative Example 1 | 1129 | 1016 |
| Comparative Example 2 | 1112 | 1000 |
| Comparative Example 3 | 1145 | 1031 |
| Comparative Example 5 | 976 | 976 |
| Comparative Example 6 | 1210 | 1089 |

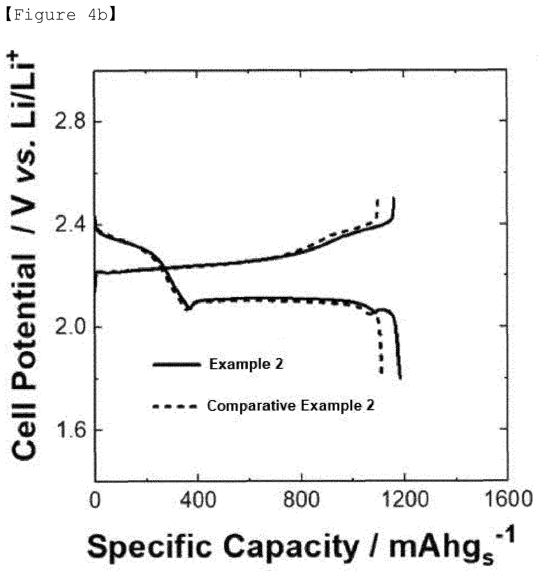

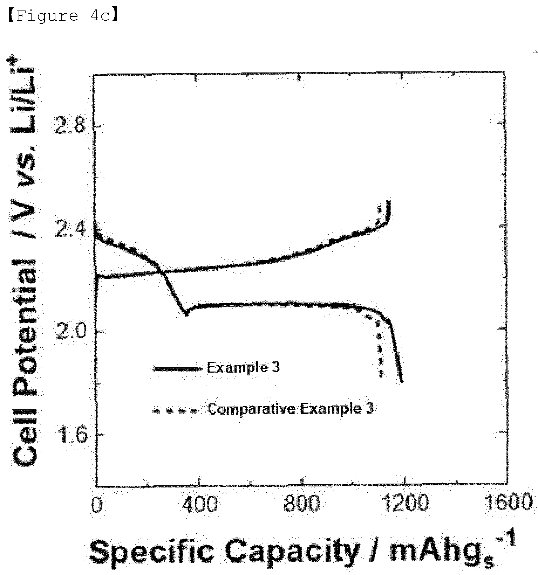

Referring to Table 3 above, FIGs. 4a, 4b, and 4c, it was confirmed that Examples 1, 2, and 3, which are electrodes manufactured by the dry process, have improved overvoltage in the initial discharging curve and have higher initial discharging capacity compared to Comparative Examples 1, 2, and 3 manufactured by the wet process.

In general, the porosity is an important factor in lithium-sulfur secondary batteries. It means that the lower the porosity is, the more compact the cell is. However, as the porosity is lowered, the reaction space becomes narrower. Therefore, a situation in which normal cell operation is difficult may occur at a lower porosity.

However, it was confirmed that Examples 1, 2, and 3 manufactured by the dry process show improvement in overvoltage and higher initial discharging capacity when they have the same porosity as Comparative Examples 1, 2, and 3 manufactured by the wet process.

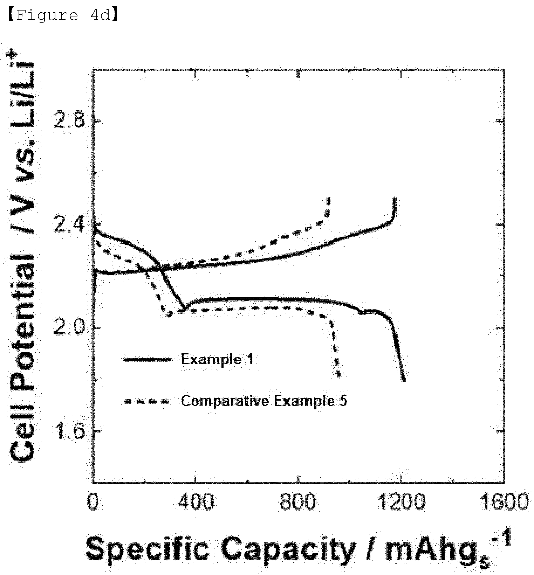

Also, referring to Table 3 and FIG. 4d, it was confirmed that in the case of Comparative Example 5, the pressure applied during the production of the positive electrode material is as high as 20 MPa, and the porosity is excessively lowered, so the cell does not operate normally.

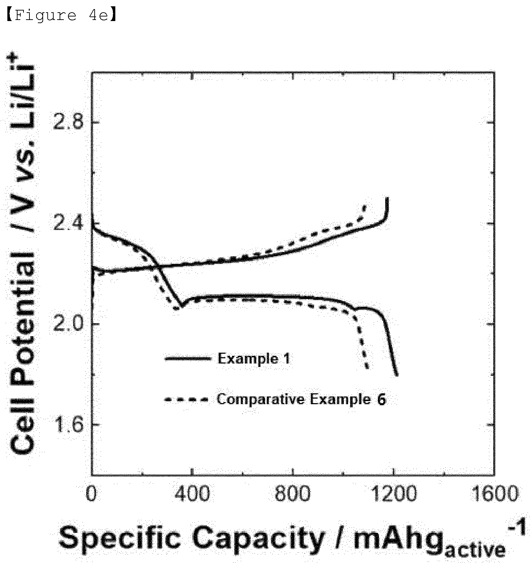

Also, referring to Table 3 and FIG. 4e, it was confirmed that in the case of Comparative Example 6, when the positive electrode material is manufactured by a dry process by adding CNTs as the electrically conductive material in addition to the sulfur-carbon composite, it is difficult to form the positive electrode material during pressurization due to the lack of cohesive force of carbon itself, and the capacity of the positive electrode material is inferior to Example 1 to which no electrically conductive material is added.

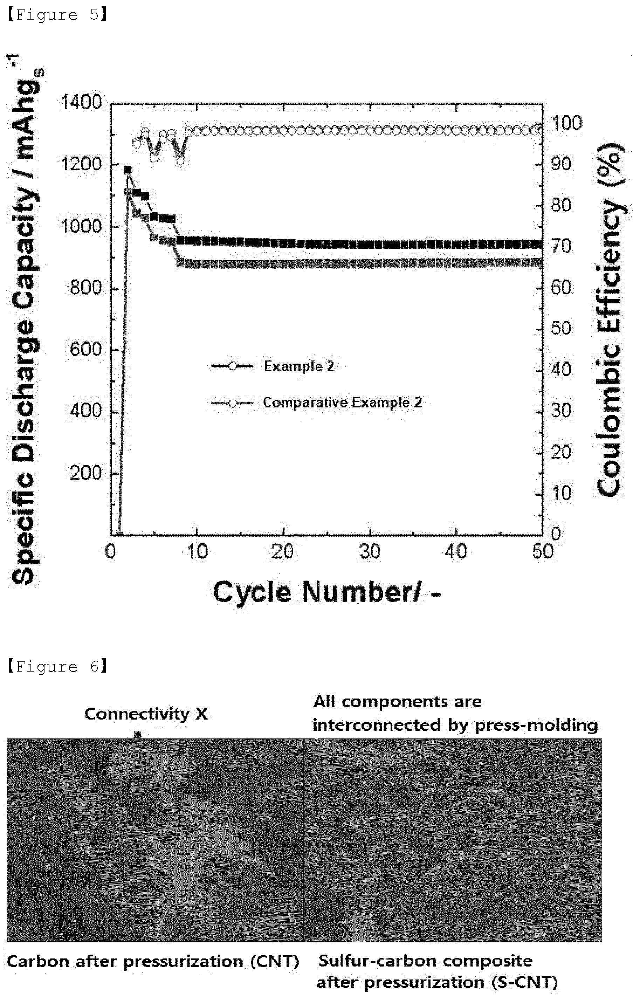

In addition, FIG. 5 is a graph showing the measurement results of lifetime characteristics for the coin cells to which the positive electrode materials prepared in Example 2 and Comparative Example 2 were applied. From this, it can be seen that the lifetime characteristics of the battery including the electrode of Example 2 manufactured by the dry process is improved.

### Experimental Example 4: Confirmation of internal shape of positive electrode material

After applying the carbon nanotubes (CNTs) used as raw materials in Preparation Example 1 and sulfur-carbon composite (S-CNTs) to the pressing process, the internal shape was confirmed. The pressing process was applied as shown in (1) of Example 1.

After the carbon nanotubes (CNTs) and sulfur-carbon composites (S-CNTs) were filled in a mold, it was pressurized at a pressure of 1 MPa using a hydraulic press, and then the internal shape was confirmed with a scanning electron microscope (SEM).

FIG. 6 is a SEM photograph of the carbon nanotubes (CNTs) and sulfur-carbon composite (S-CNTs) of Preparation Example 1.

As shown in FIG. 6, it was found that CNTs did not connect to each other due to lack of connectivity between CNTs and were not connected to each other even after the pressing process.

In addition, the sulfur-carbon composites (S-CNTs) were found to be connected as a whole by dispersing CNTs in the sulfur melt formed by melting sulfur. This is due to the fact that when the melting point of sulfur reduces during the high-pressure process and the melting of sulfur occurs on the surface of the sulfur-carbon composite instantaneously, the CNTs are connected as a whole by the sulfur melt formed. That is, it can be seen that the CNTs are dispersed in the sulfur melt.

## Claims

1. A positive electrode material for a lithium secondary battery, wherein
the positive electrode material is in the form of a free-standing film;
the positive electrode material consists of a carbon-containing sulfur melt which consists of a porous carbon material dispersed in a sulfur melt;
the sulfur is at least one of inorganic sulfur (S₈), Li₂Sₙ wherein n is an integer of at least 1, an organic sulfur compound, and a carbon-sulfur polymer (C₂Sₓ)ₙ wherein 2.5 ≤ x ≤ 50, n ≥ 2, and x and n are integers; and
the carbon-containing sulfur melt is obtainable by pressurizing a composite of the porous carbon material and the sulfur to cause sulfur located on the outer surface of the porous carbon material to melt and aggregate with surrounding sulfur.

2. The positive electrode material according to claim 1, wherein the carbon-containing sulfur melt consists of 50 wt.% to 80 wt.% of sulfur and 20 wt.% to 50 wt.% of the porous carbon material.

3. The positive electrode material according to claim 1, wherein the porous carbon material is at least one of graphite, graphene, Denka black, acetylene black, Ketjen black, channel black, furnace black, lamp black, thermal black, single wall carbon nanotube (SWCNT), multiwall carbon nanotube (MWCNT), graphite nanofiber (GNF), carbon nanofiber (CNF), activated carbon fiber (ACF), and activated carbon.

4. The positive electrode material according to claim 1, wherein the porosity of the positive electrode material is 68% or less.

5. A method for preparing a positive electrode material as defined in claim 1, comprising:
(S1) mixing sulfur and a porous carbon material to form a mixture;
(S2) heat-treating the mixture formed in step (S1) to form a sulfur-carbon composite; and
(S3) forming a carbon-containing sulfur melt by filling the sulfur-carbon composite formed in step (S2) in a container and then pressurizing the sulfur-carbon composite in the container.

6. The method according to claim 5, wherein the heat treatment is performed in a temperature range of from 130°C to 170°C.

7. The method according to claim 5, wherein the pressurization is performed under a pressure of from 0.8 MPa to 15 MPa.

8. A lithium secondary battery comprising
a positive electrode which is the positive electrode material according to any one of claims 1 to 4;
a negative electrode comprising lithium metal or a lithium alloy;
a separator positioned between the positive electrode and the negative electrode; and
an electrolyte solution impregnating the positive electrode, negative electrode, and separator.

9. The lithium secondary battery according to claim 8, which is a lithium-sulfur secondary battery.

## Patentansprüche

1. Material für eine positive Elektrode für eine Lithium-Sekundärbatterie, wobei
das Material für eine positive Elektrode in der Form einer freistehenden Folie vorliegt;
das Material für eine positive Elektrode aus einer kohlenstoffhaltigen Schwefelschmelze besteht, die aus einem porösen Kohlenstoffmaterial besteht, das in einer Schwefelschmelze dispergiert ist;
der Schwefel mindestens eines von anorganischem Schwefel (S₈), Li₂Sₙ, wobei n eine ganze Zahl von mindestens 1 ist, einer organischen Schwefelverbindung und einem Kohlenstoff-Schwefel-Polymer (C₂Sₓ)ₙ ist, wobei 2,5 ≤ x ≤ 50, n ≥ 2 und x und n ganze Zahlen sind; und
die kohlenstoffhaltige Schwefelschmelze durch Druckbeaufschlagen eines Verbundmaterials aus dem porösen Kohlenstoffmaterial und dem Schwefel erhältlich ist, um zu bewirken, dass an der Außenfläche des porösen Kohlenstoffmaterials befindlicher Schwefel schmilzt und mit umgebendem Schwefel aggregiert.

2. Material für eine positive Elektrode nach Anspruch 1, wobei die kohlenstoffhaltige Schwefelschmelze aus 50 Gew.-% bis 80 Gew.-% Schwefel und 20 Gew.-% bis 50 Gew.-% des porösen Kohlenstoffmaterials besteht.

3. Material für eine positive Elektrode nach Anspruch 1, wobei das poröse Kohlenstoffmaterial mindestens eines von Graphit, Graphen, Denka-Ruß, Acetylen-Ruß, Ketjen-Ruß, Kanal-Ruß, Ofen-Ruß, Lampen-Ruß, thermischem Ruß, einwandiger Kohlenstoffnanoröhre (SWCNT), mehrwandiger Kohlenstoffnanoröhre (MWCNT), Graphit-Nanofaser (GNF), Kohlenstoff-Nanofaser (CNF), Aktivkohlenstofffaser (ACF) und Aktivkohlenstoff ist.

4. Material für eine positive Elektrode nach Anspruch 1, wobei die Porosität des Materials für eine positive Elektrode 68 % oder weniger ist.

5. Verfahren zum Herstellen eines Materials für eine positive Elektrode nach Anspruch 1, umfassend:
(S1) Mischen von Schwefel und einem porösen Kohlenstoffmaterial, um ein Gemisch zu bilden;
(S2) Wärmebehandeln des in Schritt (S1) gebildeten Gemischs, um ein Schwefel-Kohlenstoff-Verbundmaterial zu bilden; und
(S3) Bilden einer kohlenstoffhaltigen Schwefelschmelze durch Füllen des in Schritt (S2) gebildeten Schwefel-Kohlenstoff-Verbundmaterials in einen Behälter und dann Druckbeaufschlagen des Schwefel-Kohlenstoff-Verbundmaterials in dem Behälter.

6. Verfahren nach Anspruch 5, wobei die Wärmebehandlung in einem Temperaturbereich von 130 °C bis 170 °C durchgeführt wird.

7. Verfahren nach Anspruch 5, wobei das Druckbeaufschlagen unter einem Druck von 0,8 MPa bis 15 MPa durchgeführt wird.

8. Lithium-Sekundärbatterie, umfassend
eine positive Elektrode, die das Material für eine positive Elektrode nach einem der Ansprüche 1 bis 4 ist;
eine negative Elektrode, die Lithiummetall oder eine Lithiumlegierung umfasst;
einen Separator, der zwischen der positiven Elektrode und der negativen Elektrode positioniert ist; und
eine Elektrolytlösung, die die positive Elektrode, die negative Elektrode und den Separator imprägniert.

9. Lithium-Sekundärbatterie nach Anspruch 8, die eine Lithium-Schwefel-Sekundärbatterie ist.

## Revendications

1. Matériau d'électrode positive pour une batterie secondaire au lithium, le matériau d'électrode positive étant sous la forme d'un film autoportant ;
le matériau d'électrode positive consiste en une masse fondue de soufre contenant du carbone qui consiste en un matériau carboné poreux dispersé dans une masse fondue de soufre ;
le soufre est au moins un parmi un soufre inorganique (S₈), Li₂Sₙ, n étant un nombre entier au moins égal à 1, un composé de soufre organique et un polymère carbone-soufre (C₂Sₓ)n, avec 2,5 ≤ x ≤ 50, n ≥ 2, et x et n sont des nombres entiers ; et
la masse fondue de soufre contenant du carbone pouvant être obtenue par pressurisation d'un composite du matériau carboné poreux et de soufre afin de provoquer la fonte du soufre situé sur la surface externe du matériau carboné poreux et son agrégation avec le soufre environnant.

2. Matériau d'électrode positive selon la revendication 1, dans lequel la masse fondue de soufre contenant du carbone consiste en 50 % en poids à 80 % en poids de soufre et 20 % en poids à 50 % en poids du matériau carboné poreux.

3. Matériau d'électrode positive selon la revendication 1, dans lequel le matériau carboné poreux est au moins un parmi le graphite, le graphène, le Denka black, le noir d'acétylène, le Ketjen black, le noir de canal, le noir de four, le noir de lampe, le noir thermique, le nanotube de carbone à simple paroi (SWCNT), le nanotube de carbone à parois multiples (MWCNT), la nanofibre de graphite (GNF), la nanofibre de carbone (CNF), la fibre de carbone activé (ACF), et le carbone activé.

4. Matériau d'électrode positive selon la revendication 1, dans lequel la porosité du matériau d'électrode positive est de 68 % ou moins.

5. Procédé de préparation d'un matériau d'électrode positive tel que défini dans la revendication 1, comprenant :
(S1) le fait de mélanger du soufre et un matériau carboné poreux pour former un mélange ;
(S2) le fait de traiter thermiquement le mélange formé à l'étape (S1) pour former un composite soufre-carbone ; et
(S3) le fait de former une masse fondue de soufre contenant du carbone par remplissage du composite soufre-carbone formé à l'étape (S2) dans un récipient, puis par pressurisation du composite soufre-carbone dans le récipient.

6. Procédé selon la revendication 5, dans lequel le traitement thermique est effectué dans une plage de températures allant de 130 °C à 170 °C.

7. Procédé selon la revendication 5, dans lequel la pressurisation est effectuée sous une pression allant de 0,8 MPa à 15 MPa.

8. Batterie secondaire au lithium, comprenant
une électrode positive, qui est le matériau d'électrode positive selon l'une quelconque des revendications 1 à 4 ;
une électrode négative, comprenant du lithium métallique ou un alliage de lithium ;
un séparateur, positionné entre l'électrode positive et l'électrode négative ; et
une solution électrolytique, imprégnant l'électrode positive, l'électrode négative, et le séparateur.

9. Batterie secondaire au lithium selon la revendication 8, qui est une batterie secondaire au lithium-soufre.
